Europäisches Patentamt

European Patent Office

Office européen des brevets

(11) Numéro de publication: **0 266 236 B1**

## FASCICULE DE BREVET EUROPEEN

(45) Date de publication de fascicule du brevet:
02.05.91

(21) Numéro de dépôt: 87402130.6

(22) Date de dépôt: 24.09.87

(51) Int. Cl.⁵: **B25J 17/02**, B25J 9/10

(54) Tête de positionnement.

(30) Priorité: 25.09.86 FR 8613708

(43) Date de publication de la demande:
04.05.88 Bulletin 88/18

(45) Mention de la délivrance du brevet:
02.05.91 Bulletin 91/18

(84) Etats contractants désignés:
**DE GB IT**

(56) Documents cités:
**EP-A- 0 113 145
EP-A- 0 149 806
EP-A- 0 190 957
FR-A- 2 032 026**

(73) Titulaire: **AUTOMOBILES PEUGEOT
75, avenue de la Grande Armée
F-75116 Paris(FR)**

Titulaire: **AUTOMOBILES CITROEN
62 Boulevard Victor-Hugo
F-92200 Neuilly-sur-Seine(FR)**

(72) Inventeur: **van Oost, Daniel Michel
11, rue des Vieux Gagnons
F-91460 Marcoussis(FR)**
Inventeur: **François, Christian
96, rue de Tolbiac
F-75013 Paris(FR)**

(74) Mandataire: **Boivin, Claude
9, rue Edouard-Charton
F-78000 Versailles(FR)**

Rank Xerox (UK) Business Services

## Description

L'invention concerne une tête de positionnement propre à équiper un robot manipulateur pour opérer des assemblages robotiques, par exemple des assemblages d'éléments de carrosserie.

La tete de positionnement qui fait l'objet de l'invention est destinée à effectuer des déplacements très petits et très précis selon six degrés de liberté.

On connaît, par exemple du document EP-A-0 113 145, des têtes de positionnement à plusieurs degrés de liberté dont les degrés de liberté sont en série, l'élément, moteur ou vérin, qui engendre le mouvement correspondant à un degré de liberté, étant porté par un support mobile avec le ou les degré(s) de liberté antérieur(s).

On connaît également des dispositifs dans lesquels l'élément, moteur ou vérin, qui engendre le mouvement est porté par un châssis fixe, mais transmet son mouvement par l'intermédiaire d'un élément mobile avec le degré de liberté antérieur.

La tête de positionnement selon l'invention comporte un châssis fixe sur lequel sont montés six vérins propres à déplacer un châssis mobile et répartis selon trois directions orthogonales, à raison de deux vérins dans chaque direction, caractérisée en ce que les vérins sont à tige mobile et en ce que la tige de chaque vérin est reliée au châssis mobile par une liaison à cinq degrés de liberté.

Le vérin est de préférence un vérin électrique équipé de moyens d'asservissement. Un tel vérin garantit avec une grande précision les coordonnées de l'extrémité de sa tige; dans ces conditions, les déplacements du châssis mobile sont extrêmememt précis. Les erreurs de chaque vérin étant indépendantes des erreurs des autres vérins, il n'y a pas de cumul d'erreurs.

On a décrit ci-après, à titre d'exemple non limitatif, un mode de réalisation de la tête de positionnement selon l'invention, avec référence aux dessins annexés dans lesquels :

La Figure 1 est une vue en perspective de la tête de positionnement;

La Figure 2 est une vue en perspective du châssis fixe;

La Figure 3 montre la liaison d'un vérin au châssis mobile en coupe suivant III-III de la Figure 4;

La Figure 4 en est une coupe suivant IV-IV de la Figure 3.

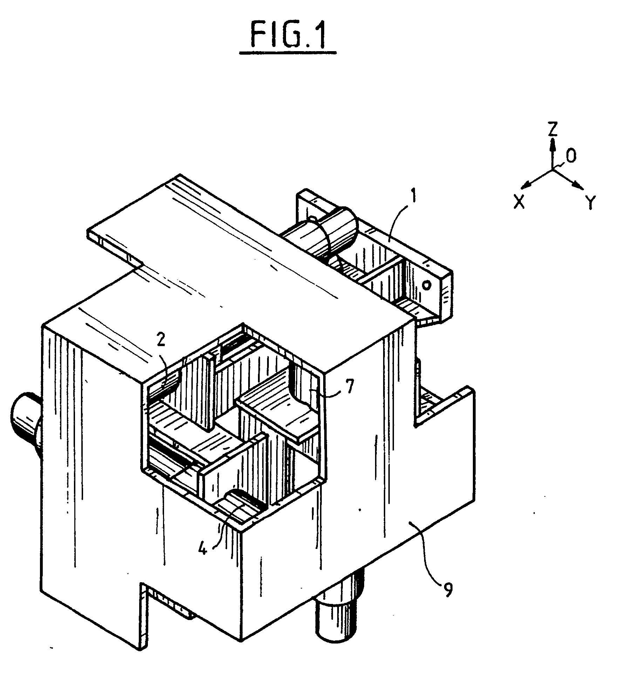

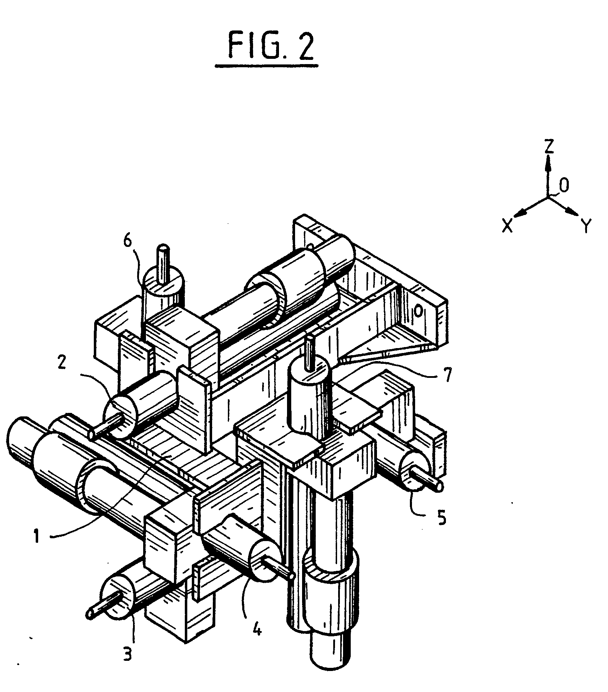

On voit sur les Figures 1 et 2 le châssis fixe 1 sur lequel sont montés six vérins à raison de deux vérins pour chacune des trois directions orthogonales OX, OY, OZ, les vérins 2 et 3 pour la direction OX, 4 et 5 pour la direction OY et 6 et 7 pour la direction OZ. Ces vérins sont des vérins électriques dont la tige 8 peut être déplacée à volonté dans un sens ou dans l'autre.

Les deux vérins 2 et 3 orientés selon l'axe X sont disposés dans le plan ZOX symétriquement par rapport à l'axe des X.

Les deux vérins 4 et 5 orientés selon l'axe des Y sont disposés dans le plan XOY symétriquement par rapport à l'axe des Y.

Les deux vérins 6 et 7 orientés selon l'axe des Z sont disposés dans le plan ZOY symétriquement par rapport à l'axe des Z.

Les tiges 8 des vérins sont reliées à un châssis mobile 9 d'une manière compatible avec les déplacements.

Pour effectuer une translation selon l'axe des X, on déplace d'une même longueur les deux vérins 2 et 3.

Pour effectuer une translation selon l'axe des Y, on déplace d'une même longueur les deux vérins 4 et 5.

Pour effectuer une translation selon l'axe des Z, on déplace d'une même longueur les deux vérins 6 et 7.

Pour effectuer une rotation autour de l'axe des X, on déplace de longueurs égales et opposées les vérins 6 et 7 et de longueurs égales les vérins 4 et 5.

Si on déplace un seul des vérins 6 ou 7 et les vérins 2 et 3, on obtient une rotation autour d'un axe pa rallèle à l'axe des X.

On peut ainsi obtenir tous les déplacements souhaités à condition qu'ils soient suffisamment petits pour rester dans les limites imposées par le montage.

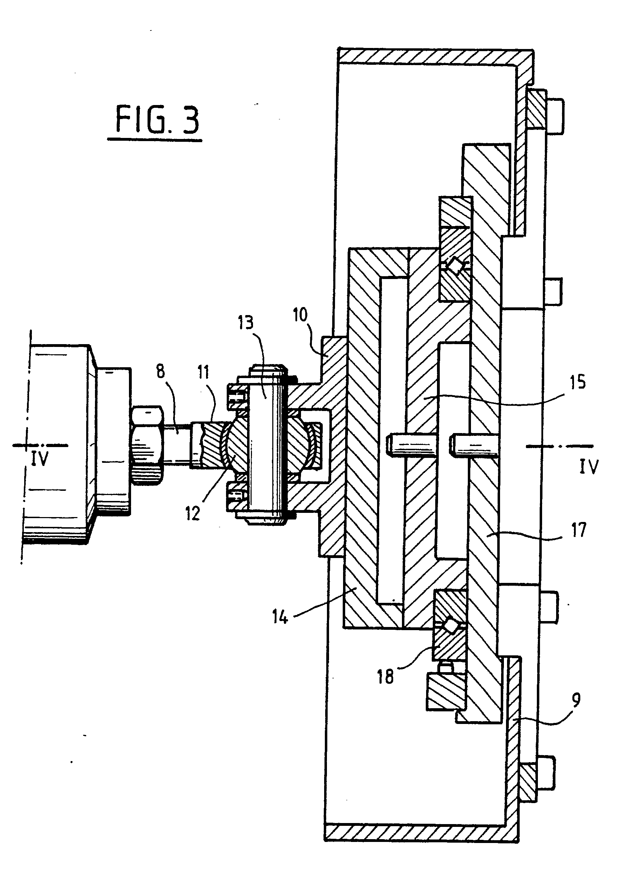

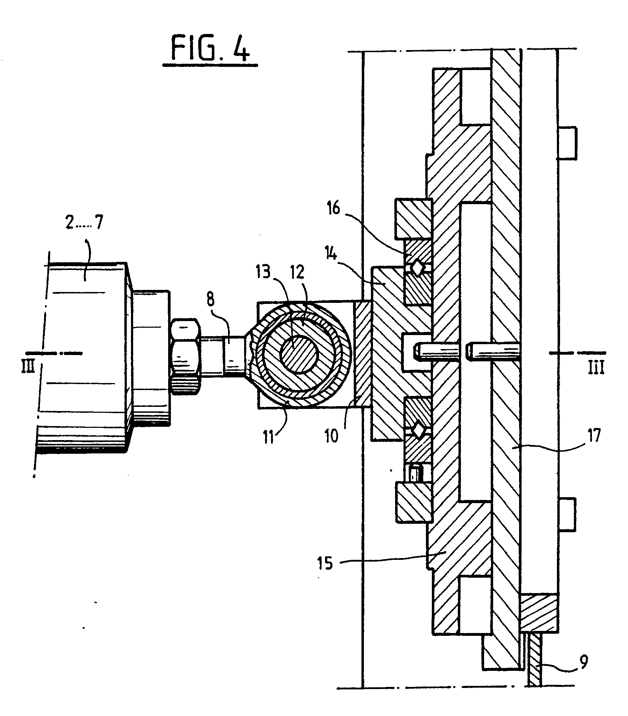

Les Figures 3 et 4 montrent le détail de la liaison entre les vérins et le châssis mobile 9.

L'extrémité de la tige 8 d'un vérin est reliée à une chape 10 par l'intermédiaire d'une rotule sphérique comprenant une cage sphérique 11 solidaire de la tige 8, une noix sphérique 12 et un axe 13 perpendiculaire à la tige 8 et reliant la noix à la chape. Cette dernière peut ainsi pivoter par rapport au vérin, aussi bien autour de l'axe de la tige 8 qu'autour de deux axes orthogonaux contenus dans un plan perpendiculaire à l'axe de la tige.

La chape 10 est fixée à un rail 14. Un deuxième rail 15 peut se déplacer par rapport au rail 14, parallèlement à l'axe de la tige 13, à l'aide d'une glissière 16 à billes.

Le châssis mobile 9 est fixé à un élément 17 qui peut se déplacer par rapport au rail 15 dans une direction perpendiculaire au plan défini par l'axe 13 et la tige 8 du vérin, à l'aide d'une glissière 18 à billes.

Le châssis 9 peut ainsi se déplacer par rapport au rail 10 dans deux directions perpendiculaires entre elles et toutes deux perpendiculaires à l'axe de la tige du vérin. Il y a ainsi en définitive cinq degrés de liberté dans la liaison entre le vérin et le châssis 9; celle-ci est ainsi compatible avec les déplacements imposés par les autres vérins.

## Revendications

1.  Tête de positionnement à six degrés de liberté propre à effectuer des assemblages robotiques, comportant un châssis fixe (1) sur lequel sont montés six vérins (2,3,4,5,6 et 7) propres à déplacer un châssis mobile et répartis selon trois directions orthogonales OX, OY et OZ, à raison de deux vérins dans chaque direction, caractérisée en ce que les vérins sont à tige mobile et en ce que la tige (8) de chaque vérin est reliée au châssis mobile (9) par une liaison à cinq degrés de liberté.

2.  Tête de positionnement selon la revendication 1, caractérisée en ce que les deux vérins dirigés selon OX sont disposés dans le plan XOZ symétriquement par rapport à OX, les deux vérins dirigés selon OY sont disposés dans le plan YOX symétriquement par rapport à OY, et les deux vérins dirigés selon OZ sont disposés dans le plan ZOY symétriquement par rapport à OZ.

3.  Tête de positionnement selon la revendication 1 ou 2, caractérisée en ce que l'extrémité de la tige (8) de chaque vérin est équipée d'une rotule sphérique dont l'élément attelé (10) peut pivoter autour de deux axes orthogonaux perpendiculaires à la tige (8) et autour de l'axe de la tige.

4.  Tête de positionnement selon la revendication 3, caractérisée en ce que l'élément rotulant (10) attelé à la tige (8) de chaque vérin est relié au châssis mobile (9) par l'intermédiaire d'un dispositif composé d'un premier rail (14) portant une première glissière (16) et sur lequel coulisse un deuxième rail (15) portant une deuxième glissière (18) et sur lequel coulisse le châssis mobile (9), le premier rail (14) et le deuxième rail (15) étant disposés orthogonalement entre eux et tous deux perpendiculaires à la tige (8) du vérin.

## Claims

1.  Positioning head with six degrees of freedom suitable for carrying out robot assemblings and comprising a fixed frame (1) on which mounted are six jacks (2,3,4,5,6 and 7) suitable for moving a mobile frame and distributed along three orthogonal directions OX, OY and OZ with two jacks disposed in each direction, wherein the jacks have a mobile rod and wherein the rod (8) of each jack is connected to the mobile frame (9) by a link with five degrees of freedom.

2.  Positioning head according to claim 1, wherein the two jacks directed along OX are disposed in the plane XOZ symmetrically with respect to OX, the two jacks directed along OY are disposed in the plane YOX symmetrically with respect to OY, and the two jacks directed along OZ are disposed in the plane ZOY symmetrically with respect to OZ.

3.  Positioning head according to claim 1 or 2, wherein the extremity of the rod (8) of each jack is equipped with one spheric pivot whose element (10) may pivot around the two orthogonal axes perpendicular to the rod (8) and around the axis of the rod.

4.  Positioning head according to claim 3, wherein the rotating element (10) coupled to the rod (8) of each jack is connected to the mobile frame (9) by means of a device composed of a first rail (14) bearing a first sliding rail (15) and on which a second sliding rail (18) slides and on which the mobile frame (9) slides, the first rail (14) and the second rail (15) being disposed orthogonally to each other and both being perpendicular to the rod (8) of the jack.

## Ansprüche

1.  Positionierkopf mit sechs Freiheitsgraden, geeignet zur Durchführung von Montagen durch Roboter mit einem festen Gestell (1), auf dem sechs Stellantriebe (2,3,4,5,6 und 7) montiert sind, die zur Verschiebung eines beweglichen Gestells geeignet und auf drei zueinander senkrechte Richtungen (OX, OY und OZ) derart verteilt sind, daß jeder Richtung zwei Stellantriebe zugeordnet sind, dadurch gekennzeichnet, daß die Stellantriebe bewegliche Stellglieder aufweisen und daß das Stellglied (8) jedes Stellantriebs mit dem beweglichen Gestell (9) über eine Verbindung mit fünf Freiheitsgraden verbunden ist.

2.  Positionierkopf nach Anspruch 1, dadurch gekennzeichnet, daß die beiden in Richtung OX ausgerichteten Stellantriebe in der Ebene XOZ symmetrisch im Hinblick auf OX angeordnet sind, die beiden in Richtung OY ausgerichteten Stellantriebe in der Ebene YOX symmetrisch im Hinblick auf OY angeordnet sind und die beiden in Richtung OZ ausgerichteten Stellantriebe in der Ebene ZOY symmetrisch im Hinblick auf OZ angeordnet sind.

3. Positionierkopf nach Anspruch 1 oder 2, dadurch gekennzeichnet, daß das äußere Ende des Stellgliedes (8) jedes Stellantriebs mit einem Kugelgelenk versehen ist, dessen Koppelelement (10) um zwei zueinander und zum Stellglied (8) senkrechte Achsen sowie um die Achse des Stellglieds schwenkbar ist.

4. Positionierkopf nach Anspruch 3, dadurch gekennzeichnet, daß das am Stellglied (8) jedes Stellantriebs befestigte schwenkbare Element (10) mit dem beweglichen Gestell (9) unter Zwischenschaltung einer Vorrichtung verbunden ist, die eine erste Schiene (14) mit einer ersten Führung (16) aufweist, auf der eine zweite Schiene (15) verschiebbar ist, welche eine zweite Führung (18) aufweist, auf der das bewegliche Gestell (9) verschiebbar ist, wobei die erste Schiene (14) und die zweite Schiene (15) senkrecht zueinander und beide senkrecht zum Stellglied (8) des Stellantriebs angeordnet sind.

# FIG.1

# FIG. 2

FIG. 3

# FIG. 4